# DEMANDE DE BREVET EUROPEEN

(11) **EP 1 298 593 A1**
(43) Date de publication de la demande: **02.04.2003**
(21) Numéro de dépôt: 02078842.8
(22) Date de dépôt: 18.09.2002
(51) Int. Cl.: G06T 11/20

(54) **Méthode pour la visualisation, générée par ordinateur, de comportement d'assemblages de composants physiques**

(30) Priorité: 26.09.2001 BE 200100619
(71) Demandeur: Centre de Promotion de l' Ecole Centrale Des Arts et Métiers, 1060 Bruxelles (BE)
(72) Inventeur: Gueuning, Francis, 7090 Braine-Le-Comte (BE)
(74) Mandataire: Ostyn, Frans

(57) **Abrégé**

L'invention concerne une méthode pour la visualisation du fonctionnement d'un assemblage de composants physiques, impliquant la représentation dudit assemblage à l'aide de symboles représentant lesdits composants et leurs interconnexions, et la visualisation concomitante des résultats de calculs de simulation de grandeurs caractéristiques du fonctionnement dudit assemblage, laquelle méthode génère une séquence dynamique d'arrangements tridimensionnels, produits par ordinateur sur écran visuel, laquelle séquence d'arrangements tridimensionnels comprend :
une représentation en deux dimensions de l'assemblage de composants physiques et
une représentation des grandeurs caractéristiques du fonctionnement de l' assemblage, comme symboles quantitatifs en trois dimensions sur ladite représentation en deux dimensions, et/ou comme modification, selon un troisième axe, de ladite représentation en deux dimensions.

## Description

L'invention concerne le domaine de la visualisation de comportement d'assemblages de composants physiques, comme des circuits électriques ou électroniques, des circuits thermiques, mécaniques, hydrauliques, etc...
Une visualisation d'assemblages de composants physiques ne constitue pas seulement une représentation d'information, voire une méthode pédagogique, mais pourrait, idéalement, constituer un outil d'analyse et de développement de tels assemblages.
Une bonne technique de visualisation du fonctionnement de ces assemblages permettrait ainsi un gain considérable de temps et d'investissements expérimentaux en vue de tester et comparer des nouveaux assemblages.
Une telle technique de visualisation permettrait aussi un gain de temps et d'efforts pour les professionnels de la formation et de l'enseignement.
La formation dans le domaine des sciences des ingénieurs implique, en effet, les aspects qualitatif et quantitatif. Dans ce dernier cas, on dispose d'excellents moyens de calculs. L'aspect quantitatif est donc très développé. On constate, par contre, un grand nombre de difficultés de la part des débutants pour percevoir, pour "sentir" rapidement (qualitativement) le fonctionnement d'un assemblage, par exemple un circuit électronique, même simple. Ceci est dû principalement au fait qu'il n'est pas toujours possible de voir fonctionner l'assemblage dans la réalité. On ne peut que l'imaginer, ce qui demande de la concentration et prend du temps.
A titre d'exemple, l'électricité, et en particulier l'électronique, reste une discipline assez inaccessible pour bon nombre de personnes et pour les futurs professionnels, son apprentissage est long et lourd.

L'objectif de la présente invention est de développer un moyen qui permette de "voir" fonctionner un tel assemblage, par exemple un circuit électronique ou hydraulique. Ceci permettrait d'accélérer très fortement la compréhension du fonctionnement. Là où on a besoin d'un quart d'heure, d'une heure ou d'une journée voire d'avantage, peut-être pourra-t-on percevoir en quelques secondes ou en quelques minutes le comportement du système.

Selon l'état de la technique actuelle, les outils les plus avancés pour "voir" fonctionner un assemblage sont le résultat de simulations rendus sous forme de courbes (graphiques) et/ou de colonnes de valeurs numériques. C'est notamment le cas pour les assemblages et circuits électroniques.

Le circuit lui-même est représenté en 2 dimensions à l'aide de symboles (représentant les composants) reliés entre eux par des conducteurs électriques parfaits. Les 2 grandeurs électriques principales que l'on désire percevoir au niveau des différents conducteurs sont le potentiel (V) et le courant (I).
La visualisation du comportement du circuit se fait sous forme de courbes représentant principalement tensions et courants dans le domaine temporel ou dans le domaine fréquentiel.

Le point faible des simulations de ce type est qu'il est difficile de percevoir le lien entre les différentes courbes et les différents points du circuit.
Les tensions et courants sont déterminés en tous points des conducteurs et des bornes d'accès aux composants.
Chaque composant est représenté par un symbole qui n'a aucun rapport avec la constitution géométrique réelle du composant. Une source de tension est représentée par un cercle avec 2 bornes, un transistor bipolaire par un K à 3 bornes avec une flèche. Il est évident que dans la réalité, ces éléments n'ont pas du tout cette forme. Seules leurs bornes jouent un rôle parfaitement défini dans le circuit, leur forme ne joue aucun rôle électrique.

On ne s'intéresse donc pas à ce qui se passe à l'intérieur d'un symbole, en particulier à la façon dont le potentiel s'y répartit.

L'invention a pour objectif de remédier à ces inconvénients et de fournir une méthode permettant une visualisation dynamique du fonctionnement des assemblages.

Pour atteindre cet objectif, l'invention fournit une méthode pour la visualisation du fonctionnement d'un assemblage de composants physiques, impliquant la représentation dudit assemblage à l'aide de symboles représentant lesdits composants et leurs interconnexions, et la visualisation concomitante des résultats de calculs de simulation de grandeurs caractéristiques du fonctionnement dudit assemblage, laquelle méthode génère une séquence dynamique d'arrangements tridimensionnels, produits par ordinateur sur écran visuel, laquelle séquence d'arrangements tridimensionnels comprend
une représentation en deux dimensions de l'assemblage de composants physiques et
une représentation des grandeurs caractéristiques du fonctionnement de l' assemblage, comme symboles quantitatifs en trois dimensions sur ladite représentation en deux dimensions, et/ou comme modification, selon un troisième axe, de ladite représentation en deux dimensions.

Dans la méthode selon l'invention, pour la visualisation des phénomènes intervenant dans un assemblages de composants physiques, la position relative desdits composants physiques est exprimée dans une représentation à deux dimensions,
la valeur d'un paramètre physique choisi, propre audits composants physiques, est exprimée par le positionnement desdits composants physiques selon une troisième dimension, ou
la valeur d'au moins un autre paramètre, par exemple de flux, à divers endroits dudit assemblage, est exprimée quantitativement par la dimension d'un symbole tridimensionnel sur ladite représentation dudit assemblage.

Selon un mode de réalisation préféré de la méthode selon l'invention il est proposé d'utiliser des couleurs différentes pour représenter différents types de composants physiques et/ou pour exprimer les différents paramètres et/ou leur valeur. On peut en particulier attribuer une couleur particulière à chaque type de composants physiques

Selon une particularité préférée de l'invention, la méthode s'applique plus particulièrement à la représentation de circuits électroniques

Dans ce mode de réalisation de l'invention on peut notamment concevoir
- la représentation du potentiel (V) sous forme d'une coordonnée du circuit, dans le système à trois dimensions
- la représentation du courant (I) sous forme d'un cône entourant un conducteur
Le potentiel (V) en tout point du circuit constitue alors la coordonnée du circuit selon la troisième dimension de la représentation à trois dimensions;
le courant (I) en certains points du circuit est alors représenté sous forme de cône entourant la représentation des conducteurs.

Selon une réalisation encore plus spécifique de l'invention, chaque arrangement tridimensionnel de la séquence dynamique est généré par ordinateur, à partir de la connaissance des potentiels en chaque noeud et des courants en chaque branche du circuit.

D'autres particularités de l'invention, ainsi que sa mise en oeuvre, apparaîtront dans la description qui suit d'un mode de réalisation particulier donné à titre d'exemple purement illustratif en se référant aux figures annexées.

II est à noter que les aspects spécifiques de ces exemples ne limitent en rien la portée de l'invention telle que décrite ci-dessus et telle que définie dans les revendications qui suivent.

Les représentations générées par la méthode selon l'invention constituent ce qu'on appelle ci-dessous des "vidéomodèles".

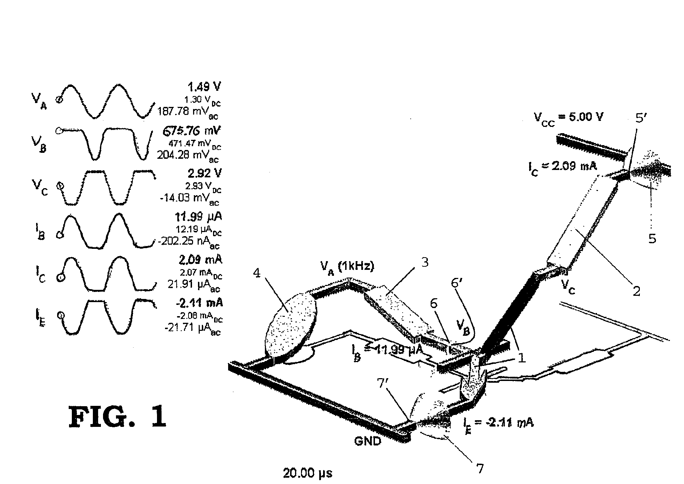

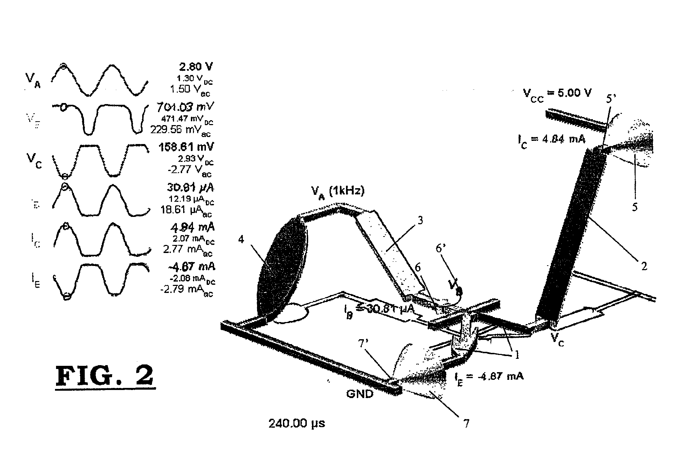

Les figures 1 et 2 annexées constituent deux exemples de tels "vidéomodèles" selon l'invention, en tant que représentation du comportement d'un circuit électronique composé de :
1 transistor NPN
2 résistances
1 source de tension,
alimenté par V_{cc} = 5V.
Chaque figure représente l'état du circuit à un moment précis (plus concrètement, au temps T = 20,00 µs après la mise sous tension du circuit et au temps T = 240.00 µs).
Cet état est rendu par les valeurs des tensions et courants représentés schématiquement, conformément à l'invention.

Dans ces vidéomodèles, on représente le circuit en 3D
les deux premières dimensions (X, Y) sont conventionnelles (spatiales)
mais la troisième coordonnée est le potentiel (V).
On a donc une représentation en 3D : X, Y, V. On retrouve pratiquement le dessin habituel du circuit si on projette le vidéomodèle dans le plan (X, Y, 0).

Le transistor bipolaire NPN , désigné par la référence (1) sur les figures 1 et 2, est représenté par un tripôle ressemblant fort au symbole classique.
Lorsque le composant est sous tension, ses bras (jonctions base-émetteur et base-collecteur) s'étirent.
Dans l'exemple représenté le transistor NPN est défini par 2354 points.

Les résistances, désignées par les références (2) et (3), sont représentées par un parallélépipède à 2 bornes (dipôle) de couleur verte en général. Il est nécessaire que ce composant élémentaire soit le plus simple possible. Dans la variante la plus simple le symbole contient 8 points en coordonnées (X, Y, V), à ,savoir les 8 coins du parallélépipède; il est toutefois préférable, afin de produire une impression 3D de qualité, que la résistance comporte 814 points par exemple, comme représenté aux figures 1 et 2.
La mise sous tension du composant se traduit, au niveau du symbole, par une évolution linéaire de la coordonnée (V) d'une borne à l'autre. Cette évolution ne traduit pas nécessairement un comportement interne du composant puisque, rappelons-le, la seule information dont nous disposons concerne les bornes du composant, nous ne nous intéressons pas à la répartition interne de potentiel.

La source de tension, désignée par la référence (4), a pour symbole un dipôle ressemblant à un disque (en l'absence de tension appliquée) par exemple de couleur rouge sombre.

Lorsque le potentiel n'est pas identique en tout point du circuit, les conducteurs joignant les composants restent horizontaux tandis que les symboles de composants s'étirent suivant la coordonnée (V) en fonction des potentiels de leurs différentes bornes.

Comme le courant est un débit de charges circulant dans un conducteur ou pénétrant (ou sortant) par une borne d'un composant, il est classiquement représenté par une flèche, tout comme la tension, ce qui fait que certains débutants mélangent parfois ces deux grandeurs. Fondamentalement, la flèche est bien adaptée à la représentation d'un courant. Elle est donc utilisée dans les vidéomodèles mais apparaît sous une forme (quasi)cylindro-ogivale entourant un conducteur. Pour simplifier, nous parlerons d'un cône de courant.

Les dimensions des cônes de courant de l'exemple représenté aux figures 1 et 2 (désignés par les références (5), (6) et (7) sur ces figures) sont une fonction (plutôt logarithmique) de l'intensité du courant tandis que le sens de ce dernier engendre la direction du cône.
Le cône - (5), (6) et (7) apparaît en jaune-orange, et pour déceler son sens, même dans le cas de faibles courants, on le repère à l'avant par une bague - (5'), (6') et (7') - bleue.

Le vidéomodèle complet est constitué d'une succession d'images de synthèse du circuit 3D correspondant à l'évolution des tensions et courants en fonction du temps, et ce à intervalles réguliers pour être compatible avec les formats vidéo existants.
Les figures 1 et 2 représentent les images des vidéomodèles aux temps T = 20.00 µs et T = 240.00 µs.

## Revendications

1. Méthode pour la visualisation du comportement d'un assemblage de composants physiques, impliquant la représentation dudit assemblage à l'aide de symboles représentant lesdits composants et leurs interconnexions, et la visualisation concomitante des résultats de mesures, ou de calculs de simulation, de grandeurs caractéristiques du fonctionnement dudit assemblage, **caractérisé en ce que** la méthode génère une séquence dynamique d'arrangements tridimensionnels, produits par ordinateur sur écran visuel, laquelle séquence d'arrangements tridimensionnels comprend
une représentation en deux dimensions de l'assemblage de composants physiques et
une représentation des grandeurs caractéristiques du fonctionnement de l'assemblage, comme symboles quantitatifs en trois dimensions sur ladite représentation en deux dimensions, et/ou comme modification, selon un troisième axe, de ladite représentation en deux dimensions.

2. Méthode pour la visualisation des phénomènes intervenant dans un assemblage de composants physiques, **caractérisée par le fait**
**que** la position relative desdits composants physiques est exprimée dans une représentation à deux dimensions,
tandis que la valeur d'un paramètre physique choisi, propre audits composants physiques, est exprimée par le positionnement desdits composants physiques selon une troisième dimension,
**et / ou que** la valeur d'au moins un autre paramètre, à divers endroits dudit assemblage, est exprimée quantitativement par la dimension d'un symbole sur ladite représentation dudit assemblage.

3. Méthode selon la revendication 2, **caractérisée en ce qu'** elle comprend la représentation de résultats de mesures, ou de calculs de simulation, dudit ou desdits autres paramètres physiques en tant que grandeurs caractéristiques du fonctionnement dudit assemblage, exprimée quantitativement par la dimension dudit symbole.

4. Méthode selon l'une ou l'autre des revendications 2 et 3, **caractérisée en ce que** la valeur dudit ou desdits autres paramètres physiques est exprimée quantitativement par la dimension d'un symbole tridimensionnel.

5. Méthode selon l'une ou l'autre des revendication 2 à 4, **caractérisée en ce que** le paramètre exprimé quantitativement à divers endroits dudit assemblage est un paramètre de flux.

6. Méthode selon l'une ou l'autre des revendications précédentes, **caractérisée en ce que** des couleurs différentes sont utilisées pour représenter différents types de composants physiques et/ou pour exprimer les différents paramètres et/ou leur valeur.

7. Méthode selon l'une ou l'autre des revendications précédentes, **caractérisée en ce qu'**elle est appliquée à la représentation de circuits électroniques.

8. Méthode selon la revendication 7, **caractérisée en ce que** le potentiel (V) en tout point du circuit constitue la coordonnée du circuit selon la troisième dimension de la représentation à trois dimensions.

9. Méthode selon l'une ou l'autre des revendication 7 et 8, **caractérisée en ce que** le courant (I) en certains points du circuit est représenté sous forme de cône entourant la représentation des conducteurs.

10. Méthode selon les revendications 1, 8 et 9, **caractérisée en ce que** chaque arrangement tridimensionnel de la séquence dynamique est généré par ordinateur, par calculs à partir des caractéristiques des composants de l'assemblage ou par mesure des caractéristiques des composants de l'assemblage.
